# EUROPEAN PATENT APPLICATION

(11) **EP 4 834 771 A1**
(43) Date of publication of application: **04.11.2026**
(21) Application number: 24905159.0
(22) Date of filing: 02.09.2024
(51) Int. Cl.: B64F 5/60

(54) **FIXED-WING AIRCRAFT FLUTTER EXCITATION AND TESTING SYSTEM AND METHOD**

(30) Priority: 29.12.2023 CN 202311861740
(71) Applicant: AVIC Harbin Aircraft Industry Group Co., Ltd, Harbin, Heilongjiang 150060 (CN)
(72) Inventor: WANG, Lei, Harbin, Heilongjiang 150060 (CN); ZHAO, Chunzhuang, Harbin, Heilongjiang 150060 (CN); YIN, Zhongwei, Harbin, Heilongjiang 150060 (CN); GAO, Jiaxin, Harbin, Heilongjiang 150060 (CN); LIU, Tengyuan, Harbin, Heilongjiang 150060 (CN); GAO, Qiang, Harbin, Heilongjiang 150060 (CN)
(74) Representative: Osha BWB
(86) International application number: PCT/CN2024/116332
(87) International publication number: WO 2025/138997

(57) **Abstract**

The present invention belongs to the technical field of flight test, and particularly relates to a fₗutter excitation test system and method for fixed-wing aircraft. The system includes an excitation device and a test system. The excitation device includes excitation miniature rockets disposed at excitation points on tips of elastic structures of the aircraft, and an ignition control system electrically connected to the excitation miniature rocket. The test system includes an onboard signal acquisition subsystem and a vibration signal acquisition subsystem. The onboard signal acquisition subsystem contains a data acquisition recorder and a GPS antenna for recording flight state parameters of the aircraft and GPS time. The vibration signal acquisition subsystem includes low-frequency vibration acceleration sensors disposed at test points on rigid planes of the elastic structures of the aircraft, and a data acquisition recorder. The present invention can accurately, conveniently, and efficiently obtain various fₗutter modes through the excitation device, and acquire flight state parameters and vibration parameters required for flutter analysis through the test system.

## Description

### TECHNICAL FIELD

The present invention belongs to the technical field of flight test, and particularly relates to a flutter excitation test system and method for fixed-wing aircraft.

### BACKGROUND

*The Airworthiness Standards for Normal Category Aircraft* (CCAR-23, Revision 4) issued by the Civil Aviation Administration of China (CAAC) specify the aeroelastic requirements for normal category aircraft (here generally referring to aircraft with passenger seating configured for 19 or fewer seats and a maximum certificated takeoff weight of 8,618 kg or less). Among these, Section 23.2245(a) (Section 23.629 in CCAR-23, Revision 3) provides the relevant conditions for flutter flight tests but does not specify the detailed design methods for excitation approaches or the specific construction methods for measurement systems during such tests.

### SUMMARY

**Objective of the present invention:** To provide a flutter excitation test system and method for fixed-wing aircraft, capable of generating flutter excitation and acquiring test data.

**Technical solution of the present invention:** To achieve the aforementioned objective, according to a first aspect of the present invention, a flutter excitation test system for fixed-wing aircraft is provided, including an excitation device and a test system. The excitation device includes excitation miniature rockets disposed at excitation points on tips of elastic structures of the aircraft, and an ignition control system electrically connected to the excitation miniature rocket. The test system includes an onboard signal acquisition subsystem and a vibration signal acquisition subsystem. The onboard signal acquisition subsystem contains a data acquisition recorder and a GPS antenna for recording flight state parameters of the aircraft and GPS time. The vibration signal acquisition subsystem includes low-frequency vibration acceleration sensors disposed at test points on rigid planes of the elastic structures of the aircraft, and a data acquisition recorder.

In one possible embodiment, the excitation miniature rockets are rigidly connected to the tip of each elastic structure of the aircraft via an adapter structure using bolts.

In one possible embodiment, the elastic structures include a wing, a horizontal stabilizer, or a vertical stabilizer.

In one possible embodiment, each excitation point is provided with one or more excitation miniature rockets.

In one possible embodiment, the low-frequency vibration acceleration sensors are rigidly connected to the rigid plane of each elastic structure of the aircraft via an adapter structure using bolts, with installation positions selected as one point at each of a front portion and a rear portion of a fuselage, and one point at each of a front portion and a rear portion of the elastic structures.

In one possible embodiment, the ignition control system includes a mounting plate, double-pole switches, and cables. Different combinations of the double-pole switches realize a single-shot only mode, a salvo-shot only mode, or a single-shot and double-shot mixed mode. It can improve synchronization of ignition actions during a salvo of the miniature rockets and reduce or even eliminate the time difference between ignitions of two miniature rockets during a salvo. The double-pole switches are fixed on the mounting plate. The mounting plate is installed together with the test system on a specially designed and additionally installed, dedicated fixed equipment rack in the cabin, so as to achieve high integration of control switches and firm installation of test equipment, while facilitating operation by flight crew members.

In one possible embodiment, in the single-shot only mode, the double-pole switches are respectively connected to twin leads of each excitation miniature rocket. Directly operating to close a branch double-pole switch of a single miniature rocket enables firing of the miniature rockets in a single-shot only manner.

In one possible embodiment, in the salvo-shot only mode, two excitation miniature rockets are connected in series and then connected to a master double-pole switch. Directly operating to close the master double-pole switch of the two excitation miniature rockets enables firing of the miniature rockets in a salvo-shot only manner.

In one possible embodiment, in the single-shot and double-shot mixed mode, branch double-pole switches are respectively connected in series to two excitation miniature rockets and then connected to a master double-pole switch. Operating to close the master double-pole switch of the two excitation miniature rockets and then operating to close the branch double-pole switch of a single miniature rocket enables single-shot firing of the excitation miniature rockets. Operating to close the branch double-pole switches of the individual excitation miniature rockets and then operating to close the master double-pole switch of the two excitation miniature rockets enables salvo-shot firing of the miniature rockets.

According to a second aspect of the present invention, a flutter excitation test method for fixed-wing aircraft is provided, including the following steps of: at a beginning of the test, after starting an engine of the aircraft, turning on a power supply of the excitation device and the test system; during the test, after the aircraft reaches a predetermined speed, operating the ignition control system according to a predetermined miniature rocket ignition mode to obtain target flutter modes; after the test is completed, retrieving, processing, and analyzing data from the data acquisition recorders.

Compared with the prior art, the beneficial effects of the present invention are as follows:
The aircraft flight state parameters and vibration parameters obtained through the present invention can achieve GPS time synchronization, which facilitates determining the start time and end time of the data analysis period and identifying the flight state parameters corresponding to the vibration parameters. The obtained flutter modes can meet the requirements of theoretical analysis modes. the excitation device can realize various modes required for flutter analysis. The double-pole switch design controls simultaneous disconnection and connection of both positive and negative poles, thereby improving system reliability and safety. The present invention can accurately, conveniently, and efficiently obtain various flutter modes through the excitation device, and acquire flight state parameters and vibration parameters required for flutter analysis through the test system.

### BRIEF DESCRIPTION OF DRAWINGS

Figure 1 is a schematic diagram of the system architecture of a flutter excitation test system for fixed-wing aircraft according to the present invention;
Figure 2 is a schematic diagram of the structure of an ignition control system in the flutter excitation test system for fixed-wing aircraft according to the present invention;
Figure 3 is a schematic diagram of the actual installation of excitation miniature rockets; and
Figure 4 is a schematic diagram of the actual installation of low-frequency acceleration sensors.

### DETAILED DESCRIPTION

To further understand the present invention, preferred embodiments of the present invention are described below in conjunction with specific examples. However, it should be understood that these descriptions are intended solely to further illustrate the features and advantages of the invention and should not be construed as limitations on the scope of the claims of the present application.

### 1. Implementation of Excitation Device:

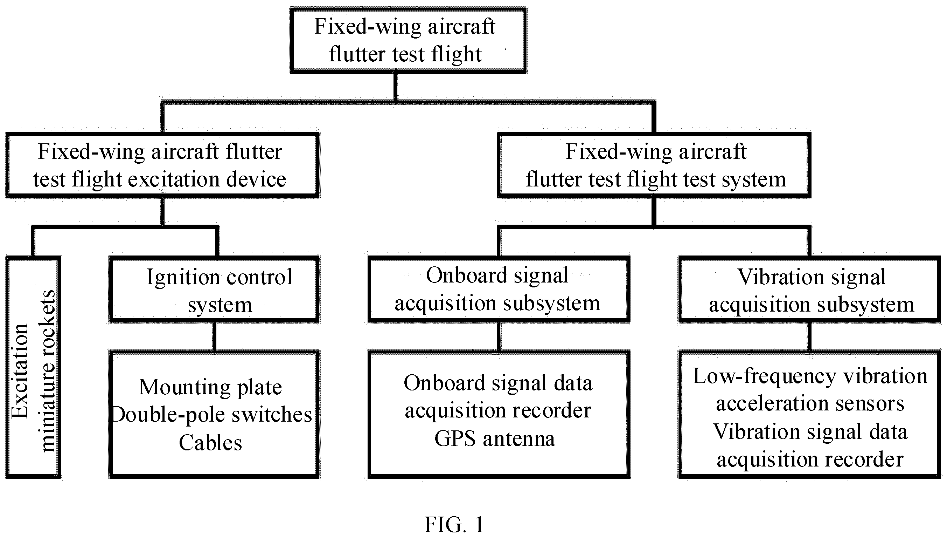

Figure 1 illustrates the structure of an excitation device and the architecture of a test system.

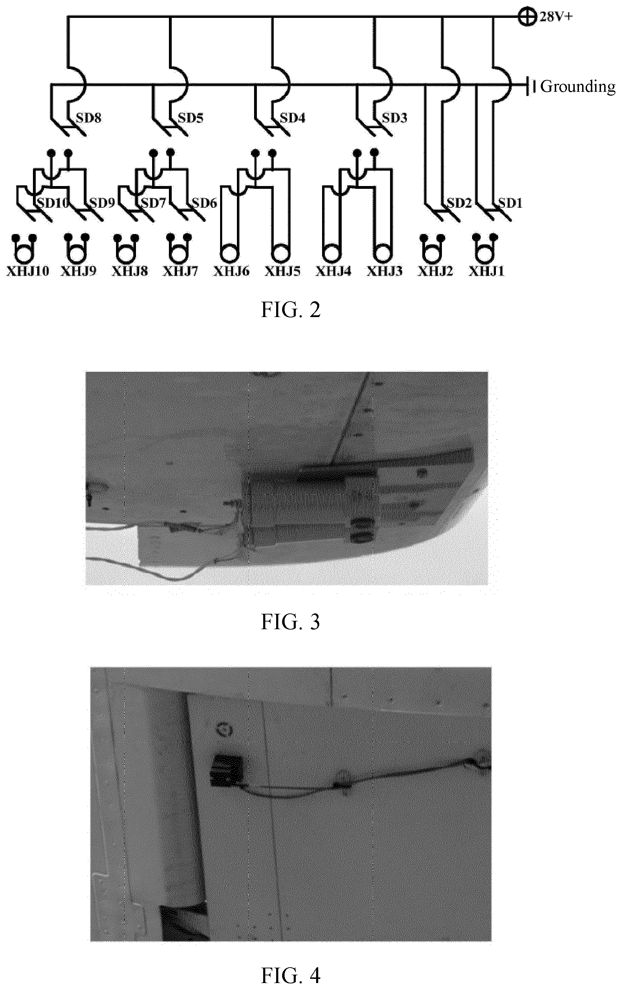

Figure 2 illustrates the structure of an ignition control system.

The excitation miniature rockets in the excitation device are off-the-shelf products including a metal casing filled with combustible material and provided with two external ignition leads. An electric spark is generated to ignite the rocket when both leads are energized. The rockets have a designed thrust of 100 kgf (equivalent to 0.98 kN by multiplying the gravitational acceleration of 9.8 m/s²), a force duration of 20 ms or 60 ms, and a substantially cylindrical shape. Since the manufacturing process involves explosives, the rockets require customized production by military-certified manufacturers possessing requisite qualifications.

The excitation miniature rockets are rigidly connected via an adapter structure using bolts to the tip of each elastic structure (wings, horizontal stabilizers, vertical stabilizers, *etc.*) of the aircraft. Depending on the different requirements for unilateral flutter modes and symmetric flutter modes, one or more excitation miniature rockets may be installed at the tip of each elastic structure and ignited as needed, thereby enabling excitation of multiple flutter modes during a single flight mission.

The ignition control system in the excitation device is a self-developed product consisting of a mounting plate, a plurality of double-pole switches, and cables. Excitation of unilateral flutter modes is achieved via the single-shot mode of the miniature rockets, while excitation of symmetric flutter modes is achieved via the salvo-shot mode. Through different combinations of the double-pole switches, the synchronization of ignition actions during a salvo of the miniature rockets can be improved, with the time difference between ignitions of two miniature rockets being reduced or even eliminated. The double-pole switches are fixed on the mounting plate. The mounting plate is installed together with the test system on a specially designed and additionally installed dedicated fixed equipment rack in the aircraft cabin, thereby achieving high integration of control switches and firm installation of test equipment, while facilitating operation by flight crew members.

The excitation miniature rockets are physically connected to the ignition control system via shielded twisted-pair cables. The routing and securing of the cables is preferably realized as internal wiring paths. Where internal wiring conditions cannot be satisfied, cable clamps may be installed at regular intervals along external wiring paths to secure the cables and prevent excessive oscillation during flight that could compromise test flight safety.

The 28-volt power supply in the excitation device draws from the aircraft's onboard power system and is connected to each miniature rocket's ignition leads and double-pole switch in series to form miniature rocket ignition control circuits. The miniature rocket ignition control circuits are connected in parallel.

Using the ignition control system structure shown in Figure 2 as an example, the operation method of the ignition control system is explained in detail:

### (1) Firing mode confirmation:

Two miniature rockets (XHJ1, XHJ2) are used in the single-shot only mode. Two miniature rockets (XHJ3 and XHJ4, or XHJ5 and XHJ6) are used in the salvo-shot only mode. Four miniature rockets (XHJ7, XHJ8, XHJ7 and XHJ8, or XHJ9, XHJ10, XHJ9 and XHJ10) are used in the single-shot and salvo-shot mixed mode.

### (2) Operation method for single-shot only mode:

Directly operating to close the branch double-pole switch of a single miniature rocket enables firing of the miniature rockets in a single-shot only manner. For example, operating to close double-pole switch SD1 enables single-shot firing of miniature rocket XHJ1; and operating to close double-pole switch SD2 enables single-shot firing of miniature rocket XHJ2.

### (3) Operation method for salvo-shot only mode:

Directly operating to close the master double-pole switch of the two excitation miniature rockets enables firing of the miniature rockets in a salvo-shot only manner. For example, operating to close double-pole switch SD3 enables salvo-shot firing of miniature rockets XHJ3 and XHJ4; and operating to close double-pole switch SD4 enables salvo-shot firing of XHJ5 and XHJ6.

### (4) Operation method for single-shot and double-shot mixed mode:

Operating to close the master double-pole switch of the two miniature rockets and then operating to close the branch double-pole switch of a single miniature rocket enables single-shot firing of the miniature rockets. Operating to close the branch double-pole switches of the individual excitation miniature rockets and then operating to close the master double-pole switch of the two miniature rockets enables salvo-shot firing of the miniature rockets. For example, operating to close master double-pole switch SD5 and then operating to close branch double-pole switch SD6 (or SD7) enable single-shot firing of miniature rocket XHJ7 (or XHJ8); operating to close master double-pole switch SD8 and then operating to close branch double-pole switch SD9 (or SD10) enable single-shot firing of miniature rocket XHJ9 (or XHJ10); and operating to close branch double-pole switches SD6 and SD7 (or SD9 and SD10) and then operating to close master double-pole switch SD5 (or SD8) enable salvo-shot firing of miniature rockets XHJ7 and XHJ8 (or XHJ9 and XHJ10).

### 2. Implementation Method of the Onboard Signal Acquisition Subsystem in the Test System:

Figure 1 illustrates the structure of an excitation device and the architecture of a test system.

The onboard signal acquisition subsystem consists of an onboard signal data acquisition recorder and a GPS antenna, powered by an external aircraft power supply (28 volts).

The onboard signal data acquisition recorder is used to acquire aircraft flight state parameters. The flight state parameters is acquired by tapping into the aircraft bus signals, directly obtained and stored by the onboard signal data acquisition recorder. The data in the onboard signal data acquisition recorder is identical to the aircraft signals. It is installed on a specially designed and additionally installed dedicated fixed equipment rack in the aircraft cabin. The onboard signal data acquisition recorder may be the KAM-500 data acquisition recorder produced by ACRA of Ireland.

The GPS antenna provides GPS time to the test system. A power splitter may be used to divide one GPS input signal into two outputs, which are then distributed to two data acquisition recorders (the onboard signal data acquisition recorder and the onboard vibration data acquisition recorder). The GPS antenna is installed on a specially designed and additionally installed dedicated bracket in front of the aircraft cockpit windshield via an extension cable to enhance GPS satellite signal reception. The GPS antenna may be the L1 antenna produced by NovAtel of Canada.

### 3. Implementation Method of the Vibration Signal Acquisition Subsystem in the Test System:

Figure 1 illustrates the structure of an excitation device and the architecture of a test system.

The vibration measurement subsystem consists of low-frequency vibration acceleration sensors and a data acquisition recorder, powered by an external aircraft power supply (28 volts).

The low-frequency vibration acceleration sensors are rigidly connected via adapter structures using bolts to high-stiffness positions on each elastic structure (wings, horizontal stabilizers, vertical stabilizers, *etc.*) of the aircraft, with installation positions selected as one point at each of a front portion and a rear portion of the elastic structures (wings, horizontal stabilizers, vertical stabilizers, *etc.*), and one point at each of a front portion and a rear portion of the fuselage. Typical positions on the engine (*e.g.*, reduction gearbox casing) are additionally selected for engine-related modes. The low-frequency acceleration sensors may be Model 3741B1230G accelerometers produced by PCB Piezotronics of the USA.

The vibration signal data acquisition recorder is used to record and store electrical signals converted from vibration signals by each low-frequency vibration acceleration sensor (GPS time being obtained via the power splitter from the GPS antenna in the onboard signal acquisition subsystem), and is installed on a specially designed and additionally installed dedicated fixed equipment rack in the aircraft cabin. The vibration signal data acquisition recorder may be the SQLAB II model data acquisition recorder produced by Acoustics GmbH of Germany.

The low-frequency acceleration sensors and the vibration signal data acquisition recorder are physically connected via dedicated cables. The routing and securing of the cables is preferably realized as internal wiring paths. Where internal wiring conditions cannot be satisfied, cable clamps may be installed at regular intervals along external wiring paths to secure the cables and prevent excessive oscillation during flight that could compromise test flight safety.

### Example 1

The Y-12F aircraft is a commuter-class, multi-purpose, all-metal, semi-monocoque light transport aircraft with a maximum takeoff weight of 8,400 kg. The aircraft configuration features twin engines, high-mounted wings, a single vertical tail, and retractable tricycle landing gear. The left and right engine nacelles are each equipped with a PT6A-65B turboprop engine manufactured by Pratt & Whitney Canada (P&WC), coupled to a five-blade HC-C-B5MP-3D/M10876ANSK metal propeller produced by Hartzell Propeller Inc. (USA), featuring constant-speed, feathering, and thrust reversal capabilities.
(1) Installation positions and methods for excitation miniature rockets: For the flutter flight tests of Y-12F aircraft, elastic structures including the left wing, right wing, left horizontal stabilizer, and right horizontal stabilizer were selected as excitation positions. The miniature rockets were installed at the front spar tip positions of these structures (force direction perpendicular to the ground). Three excitation miniature rockets were installed at each position via adapter structures to excite different modes and provide backup.
(2) Installation positions and methods for low-frequency acceleration sensors: For the flutter flight tests of Y-12F aircraft, the following positions were selected: front spar of left wing tip, rear spar of left wing tip, front spar of right wing tip, rear spar of right wing tip, front spar of left horizontal stabilizer tip, rear spar of left horizontal stabilizer tip, front spar of right horizontal stabilizer tip, rear spar of right horizontal stabilizer tip, front spar of vertical stabilizer tip, rear spar of vertical stabilizer tip, left engine reduction gearbox casing, and right engine reduction gearbox casing. At each installation position, acceleration sensors were mounted via adapter structures to acquire and record acceleration signals.
(3) Flutter Mode Classification and Excitation Methods:
   ① By a salvo-shot firing of two miniature rockets at the left and right wing tips, the "Wing Symmetric 1st Bending" mode is obtained.
   ② By a salvo-shot firing of two miniature rockets at the left and right horizontal stabilizer tips, the "Horizontal Stabilizer Symmetric 1st Bending" and "Engine Nacelle Symmetric Pitching" modes are obtained.
   ③ By a single-shot firing of one miniature rocket at the left wing tip, the "Wing Anti-symmetric 1st Bending," "Fuselage Lateral 1st Bending," and "Engine Nacelle Horizontal Bending" modes are obtained.
   ④ By a single-shot firing of one miniature rocket at the left horizontal stabilizer tip, the "Vertical Tail Lateral 1st Bending" and "Horizontal Tail Anti-symmetric 1st Bending" modes are obtained.

### Example 2

Specific operation method of the excitation device and the test system:
Figure 3 illustrates the actual installation of excitation miniature rockets.
Figure 4 illustrates the actual installation of low-frequency acceleration sensors.

① Before test initiation, the test equipment rack was installed inside the aircraft cabin. The equipment rack consists of three layers arranged from top to bottom as follows: the first layer being the ignition control system, the second layer being the vibration signal data recorder and onboard signal data recorder, and the third layer being reserved for backup equipment. The excitation miniature rockets and the low-frequency acceleration sensors were installed at predetermined positions. The miniature rockets were connected to the ignition control system via cables. The acceleration sensors were connected to the vibration signal data recorder via cables.
② At test initiation, after starting the aircraft engines, the power supplies for the excitation device and the test system were activated.
③ During test, when the aircraft reached a predetermined speed, the ignition control system was operated to fire the miniature rockets according to predetermined miniature rocket firing methods to excite target flutter modes.
④ Upon test completion, the data from the data acquisition recorders were retrieved, processed, and analyzed.
⑤ A determination was made as to whether a supplemental flight was required based on the test results.

### Test Results:

Multiple flutter modes were obtained including Wing Symmetric 1st Bending, Horizontal Stabilizer Symmetric 1st Bending, Engine Nacelle Symmetric Pitching, Wing Antisymmetric 1st Bending, Fuselage Lateral 1st Bending, Engine Nacelle Horizontal Bending, Vertical Tail Lateral 1st Bending, And Horizontal Tail Antisymmetric 1st Bending. The test data for each mode was analyzed to obtain amplitude-frequency curves, frequency-velocity curves, and damping ratio-velocity curves. The test results showed that, at dive speed V_{D}, the Y-12F aircraft did not experience significant vibration or buffeting, and that no flutter, control reversal, or divergence tendencies occurred under miniature rocket excitation.

## Claims

1. A flutter excitation test system for fixed-wing aircraft, comprising:
an excitation device; and
a test system,
wherein the excitation device comprises excitation miniature rockets disposed at excitation points on tips of elastic structures of the aircraft, and an ignition control system electrically connected to the excitation miniature rockets,
wherein the test system comprises an onboard signal acquisition subsystem and a vibration signal acquisition subsystem,
wherein the onboard signal acquisition subsystem comprises a data acquisition recorder and a GPS antenna for recording flight state parameters of the aircraft and GPS time;
wherein the vibration signal acquisition subsystem comprises low-frequency vibration acceleration sensors disposed at test points on rigid planes of the elastic structures of the aircraft, and a data acquisition recorder.

2. The flutter excitation test system for fixed-wing aircraft according to claim 1, wherein the excitation miniature rockets are rigidly connected via adapter structures using bolts to the tip of each elastic structure of the aircraft.

3. The flutter excitation test system for fixed-wing aircraft according to claim 1 or 2, wherein the elastic structures comprise a wing, a horizontal stabilizer, or a vertical stabilizer.

4. The flutter excitation test system for fixed-wing aircraft according to claim 1, wherein each excitation point is provided with one or more excitation miniature rockets.

5. The flutter excitation test system for fixed-wing aircraft according to claim 1, wherein the low-frequency vibration acceleration sensors are rigidly connected via adapter structures using bolts to a rigid plane of each elastic structure of the aircraft, with installation positions selected as one point at each of a front portion and a rear portion of a fuselage, and one point at each of a front portion and a rear portion of the elastic structures.

6. The flutter excitation test system for fixed-wing aircraft according to claim 1,
wherein the ignition control system comprises a mounting plate, double-pole switches, and cables,
wherein the double-pole switches are fixed on the mounting plate, the double-pole switches being connected to the excitation miniature rockets via cables, and
wherein different combinations of the double-pole switches enable a single-shot only mode, a salvo-shot only mode, or a single-shot and double-shot mixed mode.

7. The flutter excitation test system for fixed-wing aircraft according to claim 6,
wherein in the single-shot only mode, the double-pole switches are respectively connected to twin leads of each excitation miniature rocket, and
wherein directly operating to close a branch double-pole switch of a single miniature rocket enables firing of the miniature rockets in a single-shot only manner.

8. The flutter excitation test system for fixed-wing aircraft according to claim 6,
wherein in the salvo-shot only mode, two excitation miniature rockets are connected in series and then connected to a master double-pole switch, and
wherein directly operating to close the master double-pole switch of the two excitation miniature rockets enables firing of the miniature rockets in a salvo-shot only manner.

9. The flutter excitation test system for fixed-wing aircraft according to claim 6,
wherein in the single-shot and double-shot mixed mode, branch double-pole switches are respectively connected in series to two excitation miniature rockets and then connected to a master double-pole switch,
wherein operating to close the master double-pole switch of the two excitation miniature rockets and then operating to close the branch double-pole switch of a single miniature rocket enables single-shot firing of the excitation miniature rockets, and
wherein operating to close the branch double-pole switches of the individual excitation miniature rockets and then operating to close the master double-pole switch of the two excitation miniature rockets enables salvo-shot firing of the miniature rockets.

10. A flutter excitation test method for fixed-wing aircraft, implemented by the flutter excitation test system according to any one of claims 1-9, the method comprising the following steps:
at test initiation, after starting the aircraft engines, activating power supplies for the excitation device and the test system;
during test, when the aircraft reaches a predetermined speed, operating the ignition control system to fire the miniature rockets according to predetermined miniature rocket firing methods to excite target flutter modes; and
upon test completion, retrieving, processing, and analyzing data from the data acquisition recorders.
